# FASCICULE DE BREVET EUROPEEN

(11) **EP 0 484 310 B1**
(45) Date de publication et mention de la délivrance du brevet: **03.04.1996**
(21) Numéro de dépôt: 91870161.6
(22) Date de dépôt: 09.10.1991
(51) Int. Cl.: G01B 11/30

(54) **Dispositif pour mesurer la rugosité d'un produit métallique en mouvement**
Vorrichtung zum Messen der Rauhigkeit eines sich bewegenden Metallerzeugnisses
Device for measuring the roughness of a moving metal product

(30) Priorité: 29.10.1990 BE 9001024
(43) Date de publication de la demande: 06.05.1992
(73) Titulaire: CENTRE DE RECHERCHES METALLURGIQUES CENTRUM VOOR RESEARCH IN DE METALLURGIE Assoc. sans but lucratif Ver, zonder winstoogmerk, B-1040 Bruxelles (BE)
(72) Inventeur: Pirlet, Robert, B-4053 Embourg (BE)
(74) Mandataire: Lacasse, Lucien Emile

(56) Documents cités:
- BE-A- 1 002 609
- GB-A- 2 102 574
- GB-A- 2 170 314
- LU-A- 87 630
- PATENT ABSTRACTS OF JAPAN vol. 11, no. 121 (P-568)16 Avril 1987;& JP-A-61267728

## Description

La présente invention concerne un dispositif pour mesurer la rugosité de la surface d'un produit métallique en mouvement, en particulier d'une bande d'acier laminée à froid en défilement dans un laminoir.

La description qui va suivre fera plus spécialement référence à une telle bande d'acier laminée à froid, sans que l'invention soit toutefois limitée à cette seule application.

On connaît l'importance que revêt la rugosité de la surface pour une bande d'acier laminée à froid. Cette rugosité influence notamment la mise en oeuvre de la bande par emboutissage ainsi que son aspect après peinture, qui sont deux propriétés très importantes pour des produits tels que des tôles de carrosserie automobile.

Il existe dans la technique diverses propositions de dispositifs pour mesurer cette rugosité.

En particulier, le dispositif décrit dans le brevet LU-A- 87630 (BE-A-08801368) permet la mesure de la rugosité au moyen de deux rayonnements optiques frappant la surface de la bande en un même point, mais sous des angles d'incidence différents. A cet effet, ce dispositif connu comporte un émetteur de rayonnement incident et des récepteurs de rayonnement réfléchi, ainsi que des modulateurs comprenant chacun un organe mobile qui, alternativement, réfléchit et transmet le rayonnement incident.

Ce dispositif connu permet d'obtenir de très bons résultats lorsque la surface à mesurer reste dans le plan initialement défini pour la mesure. Il est cependant inévitable que la surface d'une bande d'acier en défilement dans un laminoir ne soit pas toujours parfaitement positionnée, en raison de débattements, c'est-à-dire de mouvements perpendiculairement à son plan, de variations de son inclinaison, de vibrations, ou encore à cause de défauts de planéité. Il en résulte que la mesure de la rugosité ne présente pas toujours la précision requise, ce qui peut compromettre sérieusement la qualité des produits fabriqués à partir de cette bande.

La présente invention a pour objet de proposer un dispositif pour mesurer la rugosité de la surface d'un produit métallique en mouvement, basé sur le même principe que le dispositif connu précité, qui permet d'éliminer les imprécisions des mesures dues à des mouvements parasites ou à des défauts géométriques de la bande. En particulier, le disposiif de l'invention permet d'affranchir la mesure des effets de débattements de ± 10 mm, de variations d'inclinaison de ± 2°, d'erreurs de positionnement, de défauts de planéité et de vibrations qui peuvent affecter la bande en cours de défilement dans un laminoir. Ce dispositif présente un encombrement réduit, déterminé essentiellement par les dimensions du boîtier qui contient les éléments de mesure. Il peut être mis en place définitivement, dans le laminoir par exemple, car il s'adapte rapidement et aisément à différents types de produits.

Conformément à la présente invention, un dispositif pour mesurer la rugosité de la surface d'un produit métallique en mouvement, comprenant un émetteur de rayonnement incident, des moyens de réflexion destinés à dévier ledit rayonnement incident vers ladite surface sous différents angles d'incidence et des récepteurs de rayonnement spéculairement réfléchi par ladite surface sous des angles correspondant auxdits angles d'incidence, dans lequel :
a) lesdits moyens de réflexion comprennent une série de miroirs, dite première série, disposés successivement le long de la trajectoire dudit rayonnement incident; et
b) les miroirs de ladite première série sont partiellement transparents à l'égard dudit rayonnement incident, à l'exception du dernier miroir de la série qui est entièrement réfléchissant à l'égard dudit rayonnement, caractérisé en ce que
c) lesdits moyens de réflexion comprennent également une seconde série de miroirs, dont chacun est associé à un miroir de ladite première série de façon à recevoir le rayonnement incident, respectivement la portion du rayonnement incident, dévié par ledit miroir de la première série;
d) chaque miroir de ladite seconde série est orienté de façon à diriger vers un même point de ladite surface le rayonnement incident, respectivement la portion du rayonnement incident, dévié par le miroir de la première série auquel ledit miroir de la seconde série est associé;
e) chacun des miroirs de ladite première série est pourvu de moyens pour le faire osciller suivant une première direction;
f) chacun des miroirs de ladite seconde série est pourvu de moyens pour le faire osciller suivant une seconde direction.

Dans le cadre de l'invention, les miroirs de ladite première série peuvent être orientés de façon quelconque et la direction d'oscillation de chaque miroir de ladite première série peut être différente de celle des autres miroirs de cette première série, avec des moyens de commande des oscillations propres à chacun desdits miroirs. Il s'est cependant avéré intéressant de disposer au moins une partie des miroirs de ladite première série dans un même plan ou dans des plans parallèles l'un à l'autre, et de prévoir une commande commune pour provoquer l'oscillation de cette partie des miroirs de ladite première série.

De même, l'orientation des miroirs de ladite seconde série, ainsi que leurs directions d'oscillation peuvent être quelconques, à la condition que tous ces miroirs renvoient vers un même point de ladite surface le rayonnement qu'ils reçoivent des miroirs de ladite première série auxquels ils sont respectivement associés. Ici également, il a été trouvé intéressant de disposer ces miroirs dans des plans perpendiculaires aux plans des miroirs de ladite première série auxquels ils sont respectivement associés et de les faire osciller dans des directions sensiblement perpendiculaires aux directions d'oscillation des miroirs correspondants de ladite première série.

Selon l'invention, les moyens de mise en oscillation dans leur direction d'oscillation respective de deux miroirs, associés comme cela vient d'être décrit, assurent des fréquences d'oscillation comprises entre 20 Hz et 100 Hz, qui peuvent être différentes pour chaque miroir. L'amplitude angulaire de ces oscillations ne dépasse pas ± 2°, et de préférence pas ± 1° par rapport à la position moyenne des miroirs.

Egalement selon l'invention, l'émetteur de rayonnement incident est un générateur laser. Le rayonnement incident est avantageusement un rayonnement intermittent ou pulsé, qui peut être obtenu par tout moyen approprié. A cet effet, on utilise de préférence un générateur laser à modulation électronique interne; on peut toutefois utiliser un générateur laser continu associé à des moyens mécaniques de hachage du rayonnement laser tels qu'un organe rotatif ajouré. Il ne sortirait d'ailleurs pas du cadre de l'invention d'utiliser un rayonnement laser continu, si l'on dispose de récepteurs acceptant un tel rayonnement.

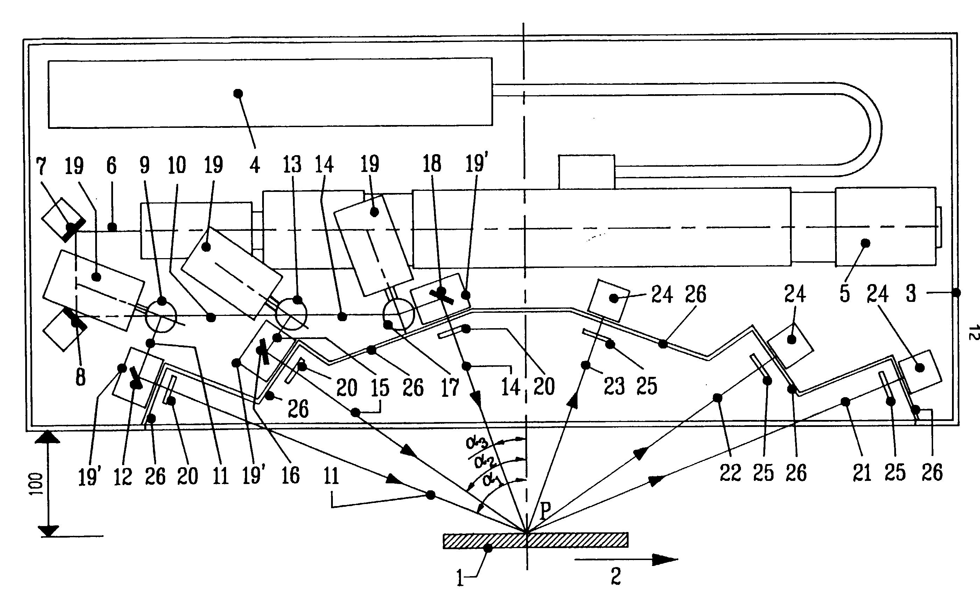

D'autres avantages et d'autres caractéristiques de l'invention apparaîtront encore à la lecture de la description qui va suivre et qui est consacrée à une réalisation préférée du dispositif de l'invention. Cette description se réfère à la figure unique annexée, qui illustre le principe du schéma optique d'un dispositif de mesure de la rugosité comportant d'une part, trois paires de miroirs et d'autre part trois récepteurs de faisceau laser. Cette représentation schématique, sans échelle particulière, ne comporte que les éléments nécessaires à la compréhension de l'invention.

Dans cette figure, on a représenté en 1 une bande d'acier laminée à froid, qui défile dans le sens de la flèche 2. Au-dessus de cette bande, à une distance de 100 mm, est placé un dispositif conforme à l'invention pour mesurer en continu la rugosité de la surface supérieure de la bande. Dans la réalisation illustrée par la figure, ce dispositif comprend un boîtier 3 contenant une source de tension électrique 4 et un émetteur de rayonnement 5 alimenté par ladite source 4. Ces appareils sont bien connus dans la technique et il n'est dès lors pas nécessaire de les décrire ici de façon détaillée. Pour fixer les idées, on indiquera simplement que l'émetteur de rayonnement 5 est un générateur laser à modulation électronique, qui émet un faisceau laser pulsé 6. Ce faisceau laser 6 est tout d'abord dévié successivement par deux miroirs fixes 7, 8 dont le seul rôle est de "raccourcir" le schéma optique du dispositif et ainsi de réduire l'encombrement de ce dernier. En suivant la trajectoire du faisceau laser 6 dévié par les miroirs 7 et 8, on trouve un premier miroir oscillant 9, partiellement transparent, qui laisse passer une partie 10 du faisceau laser et dévie une autre partie 11 de ce faisceau laser vers un deuxième miroir oscillant 12, lequel renvoie cette partie 11 du faisceau laser vers un point P de la surface de la bande 1, sous un premier angle d'incidence α₁. La partie 10 du faisceau laser, ayant traversé le miroir partiellement transparent 9, arrive sur un troisième miroir oscillant 13, partiellement transparent lui aussi; celui-ci laisse à son tour passer une partie 14 du faisceau laser et dévie une autre partie 15 de ce faisceau laser vers un quatrième miroir oscillant 16, lequel renvoie cette partie 15 du faisceau laser vers le même point P de la surface de la bande 1, sous un deuxième angle d'incidence α₂. La partie 14 du faisceau laser, ayant traversé le miroir partiellement transparent 13, arrive sur un cinquième miroir oscillant 17, qui dévie cette partie 14 du faisceau laser vers un sixième miroir oscillant 18, lequel renvoie cette partie 14 du faisceau laser vers le même point P de la surface de la bande 1, sous un troisième angle d'incidence α₃.

Les miroirs partiellement transparents 9, 13 sont avantageusement choisis de telle manière que les trois faisceaux incidents partiels 11, 15 et 14 aient sensiblement la même intensité lumineuse.

Les miroirs oscillants 9,13,17 d'une part et 12,16,18 d'autre part, sont pourvus de moyens appropriés de commande et de réglage des oscillations, connus dans la technique et désignés respectivement ici par les repères numériques 19 et 19′. Ces miroirs 9,12; 13,16 et 17,18 sont de préférence des miroirs plans.

Les faisceaux 11, 15 et 14 sortent du boîtier 3 par des fenêtres de type connu, symbolisées par des écrans 20. Ils parviennent ensuite au point P de la surface de la bande 1, sous des angles d'incidence respectifs α₁, α₂ et α₃. Ces faisceaux sont réfléchis spéculairement en 21, 22 et 23 vers des récepteurs fixes 24 situés à l'intérieur du boîtier 3; à cet effet, les faisceaux partiels 21, 22 et 23 traversent des fenêtres 25, qui peuvent être identiques aux fenêtres de sortie 20.

Dans la réalisation représentée ici, le boîtier 3 présente une cavité délimitée par une partie rentrante de la paroi extérieure. Cette partie de paroi comporte avantageusement des portions planes 26, d'inclinaison appropriée, dans lesquelles sont installées les fenêtres 20 et 25. Cette partie de paroi est avantageusement symétrique par rapport au plan perpendiculaire à la direction de la flèche 2 et passant par le point P. Une telle disposition symétrique répond à la symétrie du schéma optique du dispositif; les portions planes 26 sont respectivement perpendiculaires à la direction des faisceaux incidents 11, 15, 14 et réfléchis 21, 22, 23.

Le dispositif de l'invention fonctionne de la manière suivante.

Au cours de son défilement suivant la flèche 2, la bande 1 peut être soumise à divers mouvements parasites, qui se traduisent par des déplacements verticaux, c'est-à-dire perpendiculaires à son plan, et/ou par des rotations par rapport à son plan théorique. En outre, la bande peut présenter des défauts de planéité qui provoquent localement des variations de position ou d'inclinaison de la surface dont on désire mesurer la rugosité.

En un point quelconque de la surface de la bande 1, tel que le point P par exemple, les variations précitées de position et d'inclinaison entraînent des modifications de position et de direction des faisceaux réfléchis 21, 22, 23. Les récepteurs 24 ne reçoivent donc plus les faisceaux spéculairement réfléchis par la surface de la bande 1 au point P, et la mesure de la rugosité s'en trouve compromise.

Le dispositif de l'invention permet de remédier à cette situation et de rendre à la mesure de rugosité la précision requise, malgré certains mouvements parasites aléatoires de la bande 1.

A cet effet, on fait osciller chacun des miroirs 9,12; 13,16; 17,18 autour de son axe respectif, avec une fréquence comprise entre 20 et 100 Hz, et de préférence comprise entre 30 et 50 Hz, et de préférence encore de l'ordre de 40 Hz.

Comme on le verra plus loin, ces oscillations ont pour but d'atténuer ou même de supprimer les effets défavorables dus aux mouvements parasites aléatoires de la bande.

Une fréquence d'oscillation inférieure à 20 Hz n'apporte pas d'amélioration sensible de la précision des mesures, par rapport à l'emploi de miroirs fixes. Par ailleurs, une fréquence d'oscillation de 100 Hz constitue actuellement une limite difficilement franchissable pour des raisons mécaniques et de toute façon suffisante pour donner aux mesures une précision économiquement acceptable en service industriel.

L'amplitude des oscillations est choisie en fonction de l'importance des mouvements parasites aléatoires de la bande; elle est par exemple au maximum de 2°, et de préférence au maximum de 1° de part et d'autre de la position moyenne des miroirs oscillants.

Les deux miroirs d'une paire, par exemple les miroirs 9 et 12, oscillent de préférence respectivement autour d'axes perpendiculaires l'un à l'autre. Cela signifie par exemple que les miroirs 9, 13 et 17 oscillent autour d'axes respectifs contenus dans le plan du dessin et indiqués en trait mixte, et que simultanément les miroirs 12, 16 et 18 oscillent autour d'axes respectifs perpendiculaires à ce plan.

Dans ces conditions, chacun des faisceaux partiels incidents 11, 15 et 14 décrit un volume pyramidal dont l'intersection avec la surface de la bande 1 contient le point P.

Pour une fréquence d'oscillation de chaque miroir de 40 Hz, chacun de ces faisceaux partiels occupe donc 1600 positions par seconde, chacune de ces positions correspondant à un point d'impact et à un angle d'incidence différents de chacun de ces faisceaux partiels 11, 15, 14 sur la bande 1.

Pour autant que l'amplitude des mouvements parasites de la bande 1 soit limitée, en translation et en rotation, au moins une des 1600 positions précitées de chaque faisceau partiel correspond au mieux à la position instantanée de réflexion spéculaire de ce faisceau partiel par la bande 1. Le récepteur 24 correspondant reçoit à cet instant une intensité lumineuse réfléchie maximale et il émet un signal électrique maximal. La détection des valeurs de crête des signaux produits par les divers récepteurs 24 permet ainsi de calculer avec précision la rugosité de la surface face de la bande 1, malgré les mouvements parasites aléatoires qui peuvent l'animer.

Le brevet BE-A-08801368 précité révèle que les angles α₁, α₂ et α₃ ont une valeur préférée de l'ordre de 68°, 55° et 20° respectivement. Il indique également que l'on utilise le couple d'angles (α₃ = 20° et α₂ = 55°) pour mesurer des rugosités (Ra) comprises entre 0,4 µm et 1 µm, et le couple d'angles (α₂ = 55° et α₁ = 68°) pour mesurer des rugosités (Ra) comprises entre 1 µm et 3 µm.

La précision de ces mesures peut être modifiée, en fonction des exigences de chaque application, en faisant varier la fréquence d'oscillation d'un ou de plusieurs des miroirs oscillants.

Dans le cadre de cette invention, il est avantageux de synchroniser les mouvements des miroirs d'une même paire, par exemple les miroirs 9 et 12, et d'effectuer des balayages dans deux directions selon des cycles répétitifs. A cet effet, ces miroirs peuvent être montés sur des galvanomètres.

L'invention n'est évidemment pas limitée au mode de réalisation qui vient d'être décrit et illustré. Diverses modifications peuvent y être apportées par un homme de métier, notamment en ce qui concerne le nombre de miroirs oscillants, les moyens de mise en oscillation de ces miroirs ainsi que les directions d'oscillation, sans pour autant sortir du cadre défini par les revendications qui suivent.

## Revendications

1. Dispositif pour mesurer la rugosité de la surface d'un produit métallique (1) en mouvement, comprenant un émetteur (5) de rayonnement incident (6), des moyens de réflexion destinés à dévier ledit rayonnement incident (6) vers ladite surface sous différents angles d'incidence (α₁; α₂; α₃) et des récepteurs (24) de rayonnement spéculairement réfléchi par ladite surface sous des angles correspondant auxdits angles d'incidence, dans lequel :
a) lesdits moyens de réflexion comprennent une série de miroirs (9; 13; 17), dite première série, disposés successivement le long de la trajectoire dudit rayonnement incident (6); et
b) les miroirs de ladite première série (9; 13; 17) sont partiellement transparents à l'égard dudit rayonnement incident (6), à l'exception du dernier miroir (17) de la série qui est entièrement réfléchissant à l'égard dudit rayonnement, caractérisé en ce que
c) lesdits moyens de réflexion comprennent également une seconde série de miroirs (12; 16; 18), dont chacun est associé à un miroir de ladite première série (9; 13; 17) de façon à recevoir le rayonnement incident respectivement la portion du rayonnement incident (11; 15; 14), dévié par ledit miroir de la première série;
d) chaque miroir de ladite seconde série (12; 16; 18) est orienté de façon à diriger vers un même point (P) de ladite surface le rayonnement incident, respectivement la portion du rayonnement incident (11; 15; 14), dévié par le miroir de ladite première série auquel ledit miroir de la seconde série est associé;
e) chacun des miroirs de ladite première série (9; 13; 17) est pourvu de moyens (19) pour le faire osciller suivant une première direction;
f) chacun des miroirs de ladite seconde série (12; 16; 18) est pourvu de moyens (19') pour le faire osciller suivant une seconde direction.

2. Dispositif suivant la revendication 1, caractérisé en ce qu'au moins deux des miroirs de ladite première série (9; 13; 17) sont disposés dans des plans parallèles l'un à l'autre.

3. Dispositif suivant la revendication 1, caractérisé en ce qu'au moins deux des miroirs de ladite première série (9; 13; 17) sont disposés dans un même plan.

4. Dispositif suivant l'une ou l'autre des revendications 1 à 3, caractérisé en ce que chaque miroir de ladite seconde série (12; 16; 18) est disposé dans un plan perpendiculaire au plan du miroir de ladite première série (9; 13; 17) auquel ledit miroir de la seconde série est associé.

5. Dispositif suivant l'une ou l'autre des revendications 1 à 4, caractérisé en ce que la direction d'oscillation d'au moins un miroir de ladite seconde série (12; 16; 18), c'est-à-dire au moins une desdites secondes directions, est perpendiculaire à la direction d'oscillation, dite première direction, du miroir de ladite première série (9; 13; 17) à laquelle ledit miroir de la seconde série est associé.

6. Dispositif suivant l'une ou l'autre des revendications 1 à 5, caractérisé en ce que la fréquence d'oscillation desdits miroirs (9, 13, 17; 12, 16,18) est comprise entre 20 Hz et 100 Hz.

7. Dispositif suivant la revendication 6, caractérisé en ce que la fréquence d'oscillation desdits miroirs (9,13,17; 12,16,18) est comprise entre 30 Hz et 50 Hz.

8. Dispositif suivant l'une ou l'autre des revendications 1 à 7, caractérisé en ce que l'amplitude d'oscillation d'au moins un desdits miroirs (9,13,17; 12,16,18) est au maximum égale à 2° de part et d'autre de la position moyenne dudit miroir.

9. Dispositif suivant l'une ou l'autre des revendications 1 à 8, caractérisé en ce que ledit émetteur de rayonnement est un générateur laser (5) à modulation électronique du faisceau émis.

10. Dispositif suivant l'une ou l'autre des revendications 1 à 9, caractérisé en ce que ledit émetteur de rayonnement incident (5), lesdits récepteurs de rayonnement réfléchi (24), lesdits miroirs oscillants (9,13,17; 12,16,18) ainsi que leurs moyens de mise en oscillation (19,19′) sont disposés à l'intérieur d'un boîtier (3) pourvu de fenêtres (20) de sortie des rayonnements partiels incidents (11,15,14) ainsi que de fenêtres (25) d'entrée des rayonnements partiels réfléchis (21,22,23).

## Claims

1. Device for measuring the roughness of the surface of a moving metal product (1), comprising an emitter (5) emitting an incident radiation (6), reflection means intended to deflect the said incident radiation (6) towards the said surface at various angles of incidence (α₁; α₂; α₃) and receivers (24) detecting radiation specularly reflected by the said surface at angles corresponding to the said angles of incidence, in which:
a) the said reflection means comprise a series of mirrors (9; 13; 17), called the first series, which are arranged in succession along the path of the said incident radiation (6); and
b) the mirrors (9; 13; 17) of the said first series are partially transparent with respect to the said incident radiation (6), with the exception of the final mirror (17) of the series which is entirely reflecting with respect to the said radiation, characterized in that
c) the said reflection means also comprise a second series of mirrors (12; 16; 18), each of which is associated with one mirror (9; 13; 17) of the said first series so as to receive the incident radiation, namely respectively the portion (11; 15; 14) of the incident radiation deflected by the said mirror of the first series;
d) each mirror (12; 16; 18) of the said second series is oriented so as to direct, onto the same point (P) on the said surface, the incident radiation, namely respectively the portion (11; 15; 14) of the incident radiation deflected by that mirror of the said first series with which the said mirror of the second series is associated;
e) each of the mirrors (9; 13; 17) of the said first series is provided with means (19) for making it oscillate along a first direction;
f) each of the mirrors (12; 16; 18) of the said second series is provided with means (19') for making it oscillate along a second direction.

2. Device according to Claim 1, characterized in that at least two of the mirrors (9; 13; 17) of the said first series are arranged in mutually parallel planes.

3. Device according to Claim 1, characterized in that at least two of the mirrors (9; 13; 17) of the said first series are arranged in the same plane.

4. Device according to any of Claims 1 to 3, characterized in that each mirror (12; 16; 18) of the said second series is arranged in a plane perpendicular to the plane of that mirror (9; 13; 17) of the said first series with which the said mirror of the second series is associated.

5. Device according to any of Claims 1 to 4, characterized in that the direction of oscillation of at least one mirror (12; 16; 18) of the said second series, that is to say at least one of the said second directions, is perpendicular to the direction of oscillation, called the first direction, of that mirror (9; 13; 17) of the said first series with which the said mirror of the second series is associated.

6. Device according to any of Claims 1 to 5, characterized in that the frequency of oscillation of the said mirrors (9,13,17; 12,16,18) is between 20 Hz and 100 Hz.

7. Device according to Claim 6, characterized in that the frequency of oscillation of the said mirrors (9,13,17; 12,16,18) is between 30 Hz and 50 Hz.

8. Device according to any of Claims 1 to 7, characterized in that the amplitude of oscillation of at least one of the said mirrors (9,13,17; 12,16,18) is at most equal to 2° on either side of the average position of the said mirror.

9. Device according to any of Claims 1 to 8, characterized in that the said radiation emitter is a laser generator (5) with electronic modulation of the emitted beam.

10. Device according to any of Claims 1 to 9, characterized in that the said incident radiation emitter (5), the said receivers (24) detecting reflected radiation and the said oscillating mirrors (9, 13, 17; 12, 16, 18) as well as their means (19, 19') for oscillating them are arranged inside a casing (3) provided with windows (20) for the exit of the incident partial beams (11, 15, 14) and with windows (25) for the entry of the reflected partial beams (21, 22, 23).

## Patentansprüche

1. Vorrichtung zum Messen der Rauhigkeit der Oberfläche eines sich in Bewegung befindenden metallischen Erzeugnisses (1) mit einer Quelle (5) für einfallende Strahlung (6), mit Reflexionsmitteln, welche dazu bestimmt sind, die einfallende Strahlung unter unterschiedlichen Einfallswinkeln (α₁; α₂; α₃) auf die besagte Oberfläche zu lenken, sowie mit Empfängern (24) für Strahlung, die von der Oberfläche spiegelnd unter Winkeln reflektiert wird, welche den Einfallswinkeln entsprechen, wobei:
a) die Reflexionsmittel eine Reihe von Spiegeln (9; 13; 17) - erste Reihe genannt - umfassen, welche nacheinander entlang der Bahn der besagten einfallenden Strahlung (6) angeordnet sind; und wobei
b) die Spiegel der besagten ersten Reihe (9; 13; 17) für die einfallende Strahlung (6) teilweise durchlässig sind, mit Ausnahme des letzten Spiegels (17) der Reihe, welcher diese Strahlung vollständig reflektiert, dadurch gekennzeichnet, daß
c) die Reflexionsmittel auch eine zweite Reihe von Spiegeln (12; 16; 18) umfassen, deren jeder einem Spiegel der ersten Reihe (9; 13; 17) derart zugeordnet ist, daß er die einfallende Strahlung beziehungsweise den Teil der einfallenden Strahlung (11; 15; 14) empfängt, welche durch den Spiegel der ersten Reihe abgelenkt wird;
d) jeder Spiegel der zweiten Reihe (12; 16; 18) so ausgerichtet ist, daß er die einfallende Strahlung auf ein und denselben Punkt (P) der Oberfläche lenkt, beziehungsweise den Teil der einfallenden Strahlung (11; 15; 14), welcher durch den Spiegel der ersten Reihe abgelenkt wird, dem der Spiegel der zweiten Reihe zugeordnet ist;
e) jeder der Spiegel der ersten Reihe (9; 13; 17) mit Mitteln (19) versehen ist, um ihn in eine erste Richtung schwingen zu lassen;
f) jeder der Spiegel der zweiten Reihe (12; 16; 18) mit Mitteln (19') versehen ist, um ihn in eine zweite Richtung schwingen zu lassen.

2. Vorrichtung nach Anspruch 1, dadurch gekennzeichnet, daß wenigstens zwei Spiegel der ersten Reihe (9; 13; 17) in zueinander parallelen Ebenen angeordnet sind.

3. Vorrichtung nach Anspruch 1, dadurch gekennzeichnet, daß wenigstens zwei Spiegel der ersten Reihe (9; 13; 17) in derselben Ebene angeordnet sind.

4. Vorrichtung nach einem der Ansprüche 1 bis 3, dadurch gekennzeichnet, daß jeder Spiegel der zweiten Reihe (12; 16; 18) in einer Ebene senkrecht zur Ebene des Spiegels der ersten Reihe (9; 13; 17) angeordnet ist, welchem der Spiegel der zweiten Reihe zugeordnet ist.

5. Vorrichtung nach einem der Ansprüche 1 bis 4, dadurch gekennzeichnet, daß die Schwingungsrichtung wenigstens eines Spiegels der zweiten Reihe (12; 16; 18), das heißt wenigstens eine der besagten zweiten Richtungen, senkrecht auf der Schwingungsrichtung - besagter erster Richtung - des Spiegels der ersten Reihe (9; 13; 17) steht, welchem der Spiegel der zweiten Reihe zugeordnet ist.

6. Vorrichtung nach einem der Ansprüche 1 bis 5, dadurch gekennzeichnet, daß die Schwingungsfrequenz der Spiegel (9, 13, 17; 12, 16, 18) zwischen 20 Hz und 100 Hz liegt.

7. Vorrichtung nach Anspruch 6, dadurch gekennzeichnet, daß die Schwingungsfrequenz der Spiegel (9, 13, 17; 12, 16, 18) zwischen 30 Hz und 50 Hz liegt.

8. Vorrichtung nach einem der Ansprüche 1 bis 7, dadurch gekennzeichnet, daß die Schwingungsamplitude von wenigstens einem der Spiegel (9, 13, 17; 12, 16, 18) maximal 2° auf beiden Seiten der mittleren Position dieses Spiegels beträgt.

9. Vorrichtung nach einem der Ansprüche 1 bis 8, dadurch gekennzeichnet, daß die Strahlungsquelle ein Lasergenerator (5) mit elektronischer Modulation des emittierten Strahlungsbündels ist.

10. Vorrichtung nach einem der Ansprüche 1 bis 9, dadurch gekennzeichnet, daß die Quelle für einfallende Strahlung (5), die Empfänger für reflektierte Strahlung (24), die schwingenden Spiegel (9, 13, 17; 12, 16, 18) ebenso wie die zugehörigen Mittel für das in Schwingung Versetzen (19, 19') im Inneren eines Gehäuses (3) angeordnet sind, welches mit Austrittsfenstern (20) für die einfallenden Teilstrahlen (11, 15, 14) und ebenso mit Eintrittsfenstern (25) für die reflektierten Teilstrahlen (21, 22, 23) versehen ist.
